# EUROPEAN PATENT SPECIFICATION

(11) **EP 3 293 058 B1**
(45) Date of publication and mention of the grant of the patent: **22.05.2019**
(21) Application number: 17190393.3
(22) Date of filing: 11.09.2017
(51) Int. Cl.: B60R 21/213

(54) **VEHICLE CURTAIN AIRBAG BRACKET**
HALTERUNG VON SEITENVORHANGAIRBAG EINES FAHRZEUGES
SUPPORT D'AIRBAG RIDEAU DE VÉHICULE

(30) Priority: 12.09.2016 GB 201615430
(43) Date of publication of application: 14.03.2018
(73) Proprietor: Nissan Motor Manufacturing (UK) Ltd., Cranfield Bedfordshire MK43 0DB (GB)
(72) Inventor: JAMISON, Adam, Bedford, Bedfordshire MK430DB (GB); COX, Roy, Bedford, Bedfordshire MK430DB (GB)

(56) References cited:
- EP-A1- 1 459 945
- US-A1- 2005 173 902

## Description

The invention relates to airbag systems for vehicles, and in particular to a bracket for guiding deployment of a curtain airbag; to a vehicle including a curtain airbag system and a bracket therefor; and to a method of installing a curtain airbag bracket in a vehicle.

Increasingly stringent safety standards have resulted in the widespread adoption of side airbag systems in vehicles such as cars. A common type of side airbag system is a curtain airbag system, which comprises an elongate curtain airbag stowed behind the headlining or other interior trim panels to each side of a vehicle roof. The airbag is typically stowed under or inboard of longitudinal roof members, often referred to as cant-rails. The cant-rails are located above the vehicle side windows. The airbag may be restrained by tethers or by other attachments to the vehicle structure.

The purpose of a curtain airbag is to improve protection against side impacts and roll-over impacts by inflating between the side windows of a vehicle and its occupants. This helps to protect the occupants against impact with the vehicle interior and with intruding vehicle structures during a collision. It also helps to keep the occupants contained within the vehicle.

In order to work, a curtain airbag must inflate outboard of the occupants; and inboard of the side windows and supporting structure. This requires careful control of deployment during the rapid inflation of the airbag, to ensure that the inflated airbag reaches its intended location quickly and reliably. In doing so, the airbag must avoid undesirable interaction with nearby vehicle components such as trim elements applied to structural pillars, such as the B and C pillars. Where possible, interior trim panels and other components must not become detached and interact undesirably with the curtain airbag or with the occupants during airbag deployment. Trim panels that conceal an airbag are usually designed to deflect aside as the airbag inflates; but to remain anchored to the vehicle structure throughout.

Control of curtain airbag deployment may be effected to an extent by deployment control surfaces which are attached to, or formed in the vehicle structure, typically along the cant-rails above the vehicle side windows. Deployment control surfaces are arranged to impart a desired movement to the curtain airbag in reaction to the inflation of the airbag; and/or to deflect the airbag during deployment, so that it is deployed clear of items of vehicle trim, thereby avoiding snagging of the airbag on the trim elements.

Curtain airbags are typically stowed below reaction surfaces, and above deflection surfaces; which are also known as ramps.

GB2,444,247B; GB2,444,248B; and EP1,674,349A1 each disclose brackets, which are attached to the cant-rail of a vehicle; and which include one or more deployment control surfaces for guiding deployment of a curtain airbag.

In GB'247, the bracket comprises a sunroof mechanism mounting bracket; which includes a reaction surface for guiding the airbag downwards on deployment, and a deflection surface for guiding the airbag inwards. The bracket is fixed to the cant-rail, in a region generally above the C-pillar, by threaded fasteners.

In GB'248, the bracket comprises an assist grip mounting bracket, which includes a reaction surface for guiding the airbag downwards on deployment. First and second such brackets are fixed to the cant-rail, the first above the front side door aperture and the second above the rear side-door aperture. Each bracket includes two tangs located on a lower edge. The tangs are used to facilitate initial positioning of the bracket, by locating them in slots formed in the cant-rail. The bracket is secured to the vehicle by bolts.

EP'349 also discloses a bracket which includes surfaces for guiding deployment of a curtain airbag into a vehicle cabin. The bracket is attached to the vehicle by bolts. EP1,459,945A1 discloses a bracket according to the preamble of claim 1.

On some vehicle production lines, assembly operatives are not allowed into the vehicles at the time when it is necessary to attach the brackets of the above-mentioned type to the vehicle. This makes it very difficult for the operatives to attach the brackets to the vehicle. From outside the vehicle, the operative has to correctly position and orient the bracket, while his/her view may be obscured; hold the bracket in place while inserting bolts "blindly" into bolt holes; and then tighten the bolts by hand. The operative then uses a tool to fully tighten the bolts from outside the vehicle. The overall assembly process can therefore be difficult and time consuming. Also, in the prior art arrangements, it is typically necessary to pre-weld nuts to the vehicle structure to receive the bolts. This is necessary because of the locations of the brackets on the vehicle. This introduces additional assembly steps. Furthermore, since the bolts, nuts and welds are made from steel, it provides a relatively heavy bracket assembly. Another issue with some prior art brackets is that there can be NVH (noise, vibration and harshness) issues. Occasionally the bracket mountings are not sufficiently secure, or work their way loose, and the bracket vibrates against the vehicle structure in a manner that is noticeable by the vehicle occupants.

Accordingly the invention seeks to provide a bracket, a curtain airbag system including the bracket, a vehicle including the curtain airbag system, and a method of installing a curtain airbag bracket, that mitigates at least one of the aforementioned problems; or at least provides an alternative to existing brackets, curtain airbag systems, vehicles, and installation methods. In particular, the invention seeks to provide a bracket that is quick and easy to attach to the vehicle during an assembly process; even when an assembly operative is located outside of the vehicle. The invention seeks to provide a bracket that reduces the number of assembly steps and/or the number of parts required to attach the bracket to the vehicle. The invention also seeks to provide a bracket that does not rattle when located in-situ, i.e. there are no significant noise and vibration problems.

According to one aspect of the invention, there is provided a bracket for a vehicle curtain airbag system, which is arranged to be mounted to an interior part of a vehicle adjacent an upper end of a structural pillar, the bracket including: a body having a first guide surface for guiding deployment of a curtain airbag into a vehicle cabin, the first guide surface being arranged to prevent the airbag from snagging on a pillar trim element; and a first load bearing hooking member for attaching the body to the vehicle, wherein the first hooking member is arranged to hook into an aperture formed in a vehicle structural element; characterized in that: the first hooking member includes a plastically deformable portion, which is arranged to plastically deform on insertion into the aperture. The structural element is preferably a cant-rail.

The bracket is mountable to the vehicle structural element adjacent a structural pillar, such as a B-pillar or a C-pillar. Typically the pillar has a trim element mounted along a substantial portion of the length of the pillar, for example a B-pillar trim element or a C-pillar trim element. The guide surface is arranged to guide deployment of the curtain airbag inwardly into a vehicle cabin. The guide surface guides deployment of the curtain airbag in a manner that ensures it clears an upper portion of the pillar trim element. Snagging on the pillar trim element would otherwise prevent proper deployment of the curtain airbag. A significant advantage of the invention is that the bracket can be quickly and easily attached to the vehicle by means of at least one hooking member. The or each hooking member is insertable into a respective formation, such as an aperture or recess, formed in the vehicle structural element. The or each hooking member firmly attaches the bracket to the vehicle. The or each hooking member supports the weight of the bracket body, without requiring the bracket to be bolted, welded or adhered, to the structure of the vehicle. This enables the bracket to be quickly and easily mounted from outside the vehicle, the operative simply aligning the or each hooking member with its respective formation and pivoting the bracket so that the or each hooking member locks on to the vehicle structure. Resilient clips may also be provided; but the hooking members are the primary means for attaching the bracket to the vehicle.

When the bracket is mounted in its normal operating orientation, a front side of the bracket faces generally towards the vehicle cabin. A rear side of the bracket faces generally towards the structural element, on which the bracket is mounted. An upper portion of the body is a part of the body that is closest to a vehicle roof. A lower portion of the bracket body is a part of the body that is closest to a vehicle floor. An upwards facing surface faces generally towards the vehicle roof.

Advantageously the bracket can include a second load bearing hooking member. The second hooking member can be arranged similarly to the first hooking member. The bracket can include at least one additional hooking member. The or each additional hooking member can be arranged similarly to the first hooking member.

The or each hooking member includes a plastically deformable portion, which is arranged to plastically deform on insertion into the aperture. Plastic deformation of the or each hooking member ensures a tight fit with the vehicle structure, and minimizes relative movement between the bracket and the vehicle structure, thereby reducing NVH issues.

Advantageously the plastically deformable region can include at least one crushable protrusion, such as at least one crushable rib, and preferably a plurality of crushable protrusions.

Advantageously the plastically deformable region can be located on an upper part of the or each hooking member.

Advantageously the plastically deformable region can be located on a front facing part of the or each hooking member.

Advantageously the or each hooking member can be substantially rigid, or can include a substantially rigid part. The or each hooking member is not significantly flexible. Typically the first hooking member is not resilient.

Advantageously the or each hooking member can include a first part. The first part can protrude upwards from the body. The first part can protrude substantially perpendicularly from the body.

Advantageously the or each hooking member can include a second part. The second part can protrude rearwards from the first part. The second part can protrude substantially perpendicularly from the first part. Preferably the plastically deformable region is located on the second part, typically on an upper surface thereof.

Advantageously the or each hooking member can include a third part. The third part can protrude upwards from the second part. The third part can protrude substantially perpendicularly from the second part, and preferably protrudes in generally the same direction as the first part. Preferably the plastically deformable region is located on the third part, typically on a front facing surface thereof.

Advantageously the or each hooking member can have a stepped arrangement, extending upwards, rearwards, and then upwards again from the body of the bracket.

Advantageously the or each hooking member can include at least one side wall. The or each side wall provides the first hooking member with a significant depth, which gives the or each hooking member rigidity. At least one, and preferably each, of the first, second and third parts of the hooking member includes side walls. The depth dimension of the second part of the hooking member substantially matches the height dimension of its respective aperture. In some embodiments the depth dimension of the second part of the or each hooking member is slightly larger than the height dimension of its respective aperture. This ensures a tight fit.

Advantageously the or each hooking member can include a first recess for receiving an edge of the vehicle structural element. The first recess is arranged to assist an operative to pivot the bracket with respect to the vehicle structure. The first recess is located on at least one of a front facing surface and an upwardly facing surface. The first recess is located on at least one of the second and third parts of the hooking member, and is preferably located in a portion of the hooking member adjacent to where the second and third parts meet. The first recess extends across at least a portion of the width of the hooking member. In preferred embodiments, the first recess is formed in the plastically deformable region. For example, at least one, and preferably each, of the crushable ribs includes the first recess.

Advantageously the or each hooking member can include a rounded and/or tapered leading end. The third part includes the rounded and/or tapered leading end.

The or each hooking member protrudes from an upper portion of the bracket body. This provides a natural insertion movement for the operative, particularly when the operative is located outside of the vehicle. In preferred embodiments, the or each hooking member protrudes upwards from a top (upper) side of the bracket body.

Advantageously the or each hooking member can be formed integrally with the bracket body.

Advantageously, the bracket body includes a second guide surface for guiding deployment of the curtain airbag. In use, the second guide surface faces frontwards towards the vehicle cabin.

Advantageously, the first guide surface protrudes in a frontwards direction from the second guide surface, when the bracket is located in its normal operating orientation.

Advantageously, the first guide surface protrudes from a lower portion of the second guide surface, when the bracket is located in its normal operating orientation.

Advantageously, the first guide surface is arranged substantially perpendicularly to the second guide surface. Advantageously, the parts of the bracket body that provide the first and second guide surfaces have a substantially L-shaped cross-section.

Advantageously, the second guide surface is substantially planar, or includes a substantially planar part.

Advantageously, the second guide surface can be contiguous with a front face of the or each hooking member.

Advantageously the first guide surface is substantially planar, or includes a substantially planar part. Typically, at least a central portion of the first guide surface is substantially planar.

In preferred embodiments at least one end of the first guide surface curves downwards away from the or each hooking member.

In use, the curtain airbag is typically mounted on top of the first guide surface. In this arrangement the or each hook may support a portion of the weight of the curtain airbag.

Advantageously the bracket can include at least one resilient clip, which may be located in a lower region of the bracket. The or each clip is arranged for a snap-fit connection with the vehicle structural element. The or each clip is arranged to hold the body of the bracket tightly against the vehicle structure. The or each clip is arranged for insertion into a respective hole, such as a slot, formed in the vehicle structural element. The or each clip protrudes rearwards from the body. The or each clip is arranged substantially perpendicularly with respect to the second guide surface. The or each clip includes a formation, which is arranged to engage with the vehicle structural element to hold the body tightly against the vehicle. In preferred embodiments, the bracket includes first and second resilient clips. The first clip is located at a first end of the body, which is towards the front of the vehicle in use. The first clip is arranged for insertion into a first hole. The second clip is located at a second end of the body, which is towards the back of the vehicle in use. The second clip is arranged for insertion into a second hole. The hooking members are typically mounted between the first and second resilient clips, in a longitudinal direction along the bracket.

In preferred embodiments the or each clip is formed integrally with the bracket body.

In preferred embodiments the or each clip comprises a finger, which protrudes from the bracket body. The finger has a fixed end attached to the body and a free end for insertion into the hole. The finger comprises a thin body, which enables the finger to resiliently flex.

Advantageously the bracket can comprise a moulded component. Preferably the bracket is injection moulded.

Advantageously the bracket can include a plastics material. For example, the bracket can include polypropylene. Preferably the entire bracket is made from one plastics material.

Advantageously the body can include a plurality of reinforcing ribs located on an underside of the first guide surface.

Advantageously the body can include a plurality of reinforcing ribs located on a rear side of the second guide surface.

Advantageously the body can include a recessed region located below the first guide surface arranged to accommodate an upper portion of a seatbelt mounting.

Advantageously the rear side of the bracket can be profiled to complement a mounting surface of the structural element.

According to another aspect of the invention, there is provided a curtain airbag system for a vehicle, including a curtain airbag and at least one bracket according to any configuration described herein.

According to another aspect of the invention, there is provided a vehicle including a structural element having a first aperture formed therein, a first structural pillar, and a first pillar trim element mounted on the first structural pillar. The vehicle includes a curtain airbag system including a curtain airbag and a first bracket. The first bracket has a body including a first guide surface for guiding deployment of the curtain airbag into a vehicle cabin, the guide surface being arranged to prevent the airbag from snagging on the first pillar trim element, and a first load bearing hooking member for attaching the body to the vehicle. The first hooking member is hooked into the first aperture.

Typically the structural element can comprise a cant-rail. In preferred embodiments the cant-rail is inclined to the vertical.

Advantageously, the structural element can include a second aperture. The bracket can include a second load bearing hooking member for attaching the body to the vehicle. The second hooking member is hooked into the second aperture.

Advantageously, the second hooking member can be arranged similarly to the first hooking member.

Advantageously, the or each hooking member can include a plastically deformed portion in use. The or each hooking member includes a plastically deformable portion that becomes a plastically deformed portion on insertion into its respective aperture. This ensures a tight fit with the structural element.

The second hooking member is spaced apart from the first hooking member in a longitudinal direction.

Advantageously, the plastically deformed region can be located on an upward facing surface of the or each hooking member.

Advantageously, the plastically deformed region can be located on a front facing surface of the or each hooking member.

Advantageously, the or each hooking member is located at an upper portion of the body. Having the or each hooking member located at an upper portion of the body provides the most natural movement for the operative when attaching the bracket to the vehicle from outside the vehicle.

According to another aspect of the invention, a method of installing a curtain airbag bracket with resilient clips is provided, wherein an operative aligns the or each hooking member with its respective aperture in the vehicle structural element, and pivots the bracket body downwards so that the hooking member(s) and resilient clips lock onto the vehicle structure, locking the bracket into place. When the bracket is locked onto the vehicle structure, its rear side abuts the vehicle structural element. Where resilient clips are fitted to the bracket, these provide a positive positional lock at each end of the bracket body. The hooking members are structural parts of the bracket; and must be at least as strong as a mounting bolt to retain the bracket in place so that it can properly control the deployment path of the airbag.

Advantageously, the bracket body depends from the or each hooking member. Thus the first guide surface is located below the or each hooking member.

Advantageously, the or each hooking member protrudes upwards from the body.

Advantageously, at least a portion of the or each hooking member protrudes rearwards from the body.

Advantageously, the first guide surface protrudes inwardly (forward from the bracket) towards the vehicle cabin. In preferred embodiments, the first guide surface is inclined to the horizontal; protrudes inwardly towards the vehicle cabin; and slopes downwards away from the cant-rail. In preferred embodiments, the first guide surface faces generally upwards and inwards towards the vehicle cabin. The first guide surface may be substantially perpendicular to the cant-rail.

Advantageously, the body can include a second guide surface for guiding deployment of the curtain airbag. Advantageously the second guide surface faces towards the vehicle cabin. Advantageously, the second guide surface protrudes upwards towards the vehicle roof. In preferred embodiments, the second guide surface is inclined to the vertical and faces generally towards the vehicle cabin and downwards. Preferably, the second guide surface is arranged substantially parallel with an outer surface of the cant-rail.

In preferred embodiments, the second guide surface is arranged substantially perpendicular to the first guide surface. In preferred embodiments, the first guide surface protrudes from a lower portion of the second guide surface. The body can include a substantially L-shaped cross-section. The body is elongate. The L-shaped cross-section is transverse to a longitudinal direction of the elongate body.

The first guide surface is mainly a deflection guide surface, since it deflects the curtain airbag over the pillar trim element as the airbag deploys. The second guide surface is mainly a reaction guide surface, since the airbag pushes against the second guide surface as it inflates. The reaction force from the second guide surface urges the curtain airbag in the direction of the vehicle cabin. The hooking members are structural parts of the bracket; and must be at least as strong as a mounting bolt to retain the bracket in place so that it can properly control the deployment path of the airbag.

Advantageously, at least one of the first and second guide surfaces is smooth.

Typically, the curtain airbag is seated on the first guide surface.

Advantageously, the first bracket can be mounted directly above the first pillar. The first pillar is typically one of a B-pillar and a C-pillar.

Advantageously, the vehicle can include a second structural pillar and a second pillar trim element. The curtain airbag system can include a second bracket. The second bracket is functionally similar to the first bracket; and ideally, would be identical thereto to save costs. However, there may be some minor structural differences, for example at the rear of the bracket to seat the second bracket on to the part of the cant-rail above the second pillar. These structural differences could be differences in shape to allow packaging dictated by the vehicle's external body styling; which may in turn be dictated by, for example, aerodynamic requirements. The second bracket will usually be structurally similar to the first bracket.

Advantageously, the second bracket is mounted directly above the second pillar. The second pillar may be, for example the other one of the B-pillar and the C-pillar.

In preferred embodiments, at least one of the apertures formed in the structural element has a rectangular shape.

Advantageously, the first and/or second bracket is arranged according to any configuration described herein.

An embodiment of the present invention will now be described, by way of example only, with reference to the accompanying drawings in which:
Figure 1 is a schematic isometric view of a vehicle in accordance with an aspect of the invention;
Figure 2 is an isometric view of a bracket in accordance with the invention;
Figure 3 is an isometric view of the bracket of Figure 2 mounted on to a vehicle cant-rail, above a pillar (interior trim elements not shown for clarity);
Figure 4 is a front view of the bracket of Figure 2 mounted on to a vehicle;
Figure 5 is a simplified cross-sectional view of the arrangement shown in Figure 4, along the line X-X;
Figure 6 illustrates diagrammatically how crush ribs plastically deform as a result of inserting hooking members into apertures formed in a vehicle cant-rail;
Figure 7 is a similar view to Figure 4, with a curtain airbag mounted on the bracket; and
Figure 8 is a diagrammatic cross-sectional view of a curtain airbag system mounted in-situ to a vehicle cant-rail, behind trim elements.

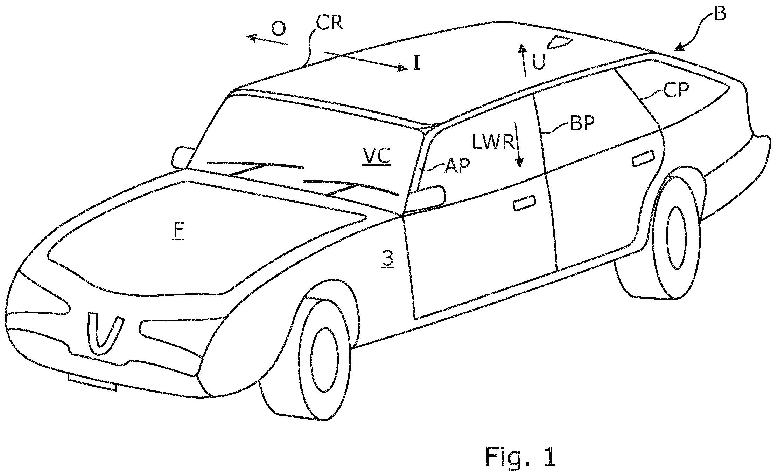

Figure 1 shows a vehicle 3 according to an aspect of the invention, in a simplified view for clarity. F represents the front of the vehicle, and B the back of the vehicle. VC represents the vehicle cabin; while AP is the A-pillar, BP is the B-pillar, and CP is the C-pillar. CR represents a cant-rail on the right hand side of the car. Direction I is inwards towards the cabin, while O is outboard of the cabin; U is an upwards direction, towards the vehicle roof; and LWR is a lower direction, towards the vehicle floor.

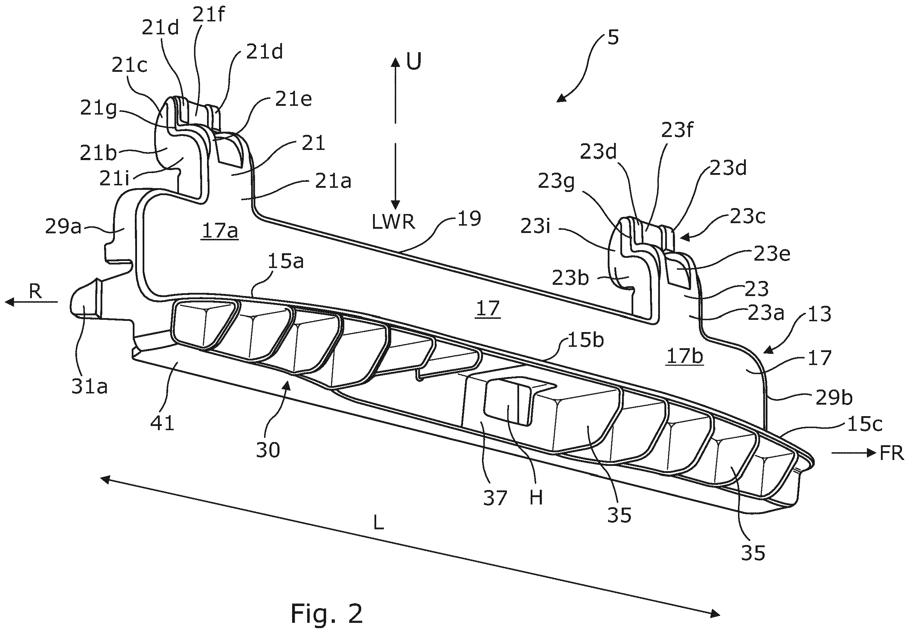

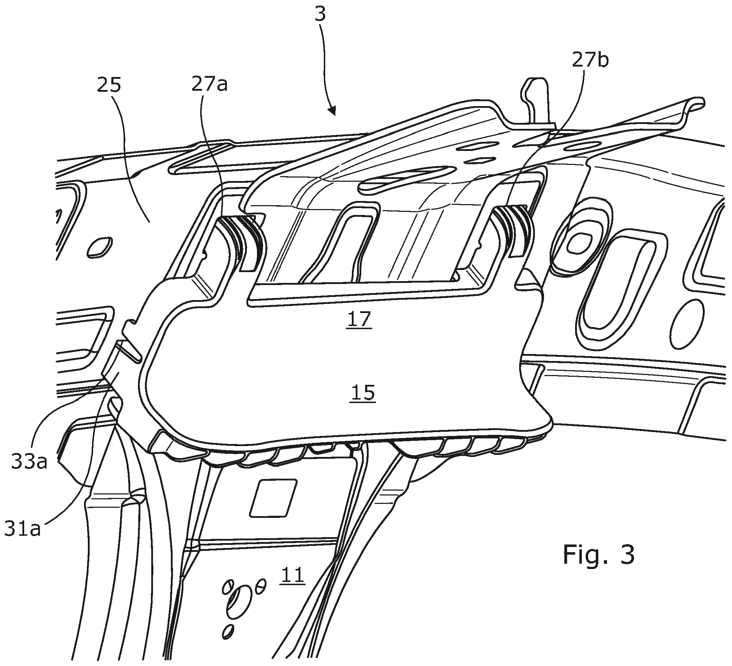

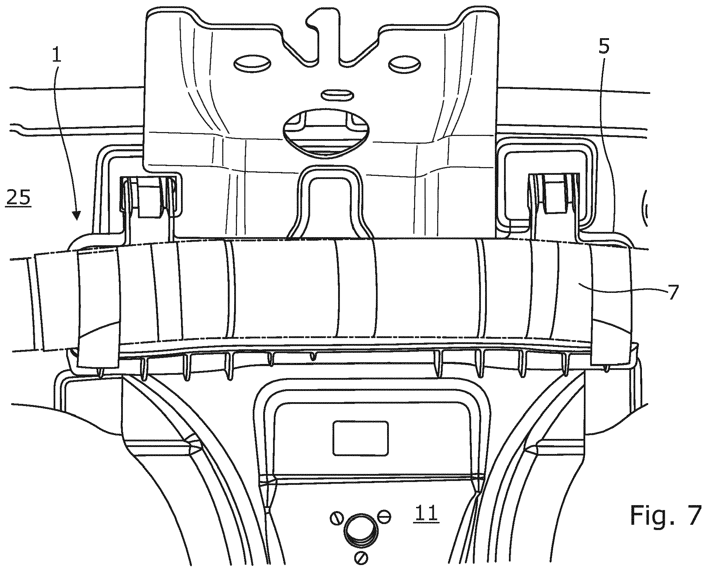

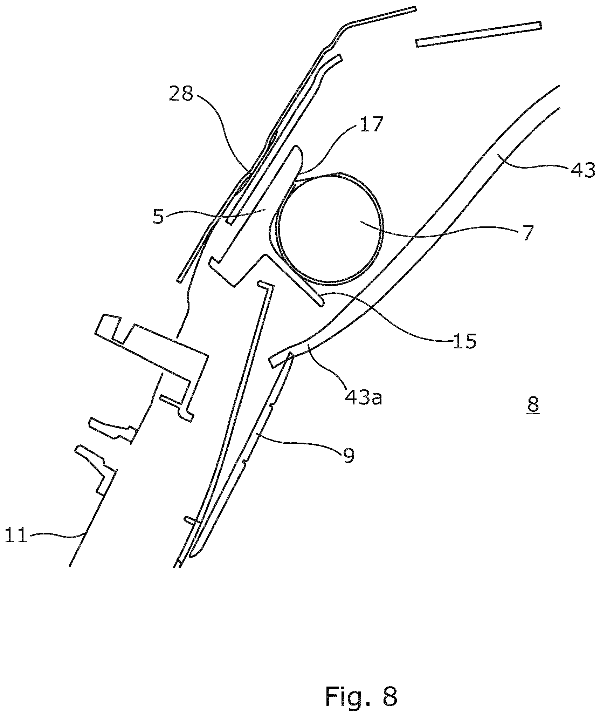

Figures 2 to 8 show part of a curtain airbag system 1 in accordance with the invention, for use in a vehicle 3, such as a motorcar. The curtain airbag system 1 includes at least one bracket 5, a curtain airbag 7 (Fig. 7), and an airbag inflation system (not shown). The bracket 5 is provided to guide deployment of the curtain airbag 7 into a vehicle cabin 8 (Fig. 8), when the airbag 7 inflates. In particular, the bracket 5 is arranged to guide deployment of the curtain airbag 7 in a manner that ensures that the curtain airbag 7 does not snag on an upper portion of a trim element 9 (Fig. 8) for a vehicle pillar 11 (Fig. 3) such as a B-pillar or a C-pillar.

The bracket 5 includes a body 13 having first and second guide surfaces 15, 17 for guiding deployment of the airbag 7 into the vehicle cabin 8 (along direction FR for front in Figure 2). The first and second guide surfaces 15, 17 are arranged substantially perpendicularly to one another. The part of the body 13 which provides the first and second guide surfaces 15, 17 has a generally L-shaped cross-section.

The first guide surface 15 includes a central area 15b, which is substantially planar. The ends 15a, 15c of the first guide surface curve downwards. The second guide surface 17 is substantially planar along its length.

The first guide surface 15 is mainly a deflection surface, which is arranged to guide the curtain airbag 7 over an upper portion of the trim element 9. The second guide surface 17 is mainly a reaction surface, since the airbag 7 reacts against the second guide surface on inflation.

The body 13 includes a top side 19. The top side 19 extends rearward (direction R in Figure 2) from an upper portion (direction U in Figure 2) of the second guide surface 17. The top side 19 is substantially perpendicular to the second guide surface 17. The top side 19 is substantially parallel to the first guide surface 15.

First and second hooks (or hooking members) 21, 23 protrude upwards from the top side 19. The hooks 21, 23 are spaced apart in a longitudinal direction L of the body. Each hook 21, 23 includes a first portion 21a, 23a which extends substantially perpendicularly upwards from the top side 19. Each hook 21, 23 includes a second portion 21b, 23b which extends substantially perpendicularly rearward from the first portion 21a, 23a. Each hook 21, 23 includes a third portion 21c, 23c which extends substantially perpendicularly upwards from the second portion 21b, 23b. Thus each hook 21, 23 extends upwards and rearwards from the top side 19, in a stepped fashion.

Each hook 21, 23 includes at least one crushable rib 21d, 23d. In the arrangement shown in Figure 2, each hook 21, 23 includes two crushable ribs 21d, 23d. The crushable ribs 21d, 23d are arranged to plastically deform when the bracket is mounted onto the vehicle. This ensures that the bracket fits tightly to the vehicle 3, and ensures that the bracket 5 does not rattle against the vehicle 3. Each crushable rib 21d, 23d is located on an upper surface 21e, 23e of the second portion 21b, 23b and on a front facing surface 21f, 23f of the third portion 21c, 23c.

Each crushable rib 21d, 23d includes a notch 21g, 23g that is arranged to receive part of the vehicle cant-rail 25 when attaching the bracket 5 to the vehicle 3. The purpose of the notch 21g, 23g is to assist an operative to pivot the bracket 5 when inserting the hooks 21, 23 into apertures 27a, 27b formed in the cant-rail 25. Each aperture 27a, 27b has a substantially rectangular form. Further notches 21h, 23h are formed at the intersection of the underside of the second portion 21b and a rearward facing portion of the first portion 21a. The notches 21h, 23h provide undercut portions to ensure that a rear side 28 of bracket 5 can sit properly against the cant-rail 25.

Each hook 21, 23 has substantial side walls 21i, 23i, which provide the hooks 21, 23 with a substantial depth. Thus the hooks 21, 23 are substantially rigid, in the sense that they do not bend on insertion into the cant-rail 25. The top 21j, 23j of each hook is substantially rounded, or tapered, to provide a relatively narrower hook tip.

Each hook 21, 23 has a substantially U-shaped cross-section, when seen in plan view, as along arrow LWR in Figure 2. This form gives the hooks strength.

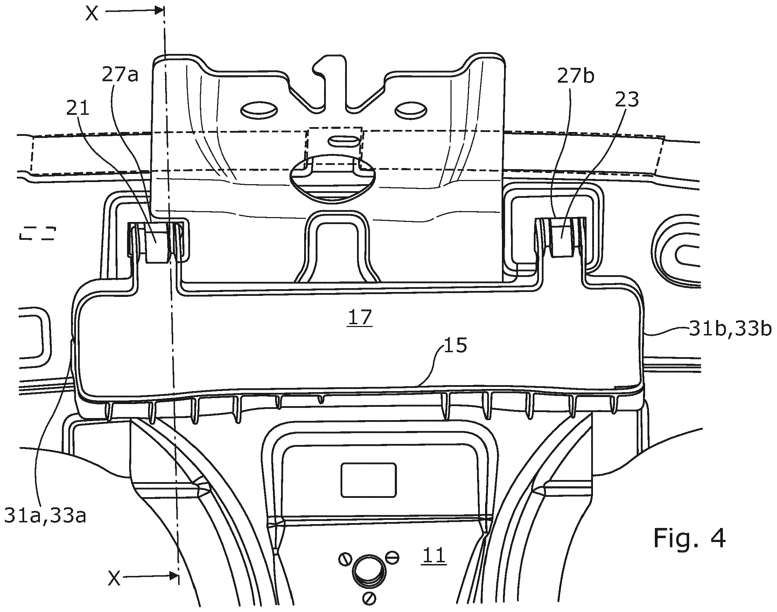

The bracket 5 includes left and right side walls 29a, 29b. Each side wall 29a, 29b extends rearward from an end portion 17a, 17b of the second guide surface 17. Each side wall 29a, 29b is substantially perpendicular to the second guide surface 17. Each side wall 29a, 29b is arranged substantially perpendicular to the first guide surface 15. Each side wall 29a, 29b includes a resiliently deformable clip 31a, 31b; which is arranged to engage a respective slot-shaped hole 33a, 33b (Fig. 4) formed in the cant-rail 25. The slots 33a, 33b are rectangular. The clips 31a, 31b help to keep a lower portion of the bracket 5 in tight engagement with the cant-rail 25. The clips 31a, 31b protrude rearward from the respective bracket side walls 29a, 29b. The clips 31a, 31b protrude substantially parallel to their respective side walls 29a, 29b.

The bracket 5 includes a base 41. An underside 30 (Fig. 2) of the first guide surface 15 includes a plurality of strengthening ribs 35. A portion 37 of the underside of the bracket is rib free. This enables the bracket to accommodate an upper part of a seatbelt fixing (not shown). A hole H is shown in Figure 2, to accommodate a seatbelt mounting component.

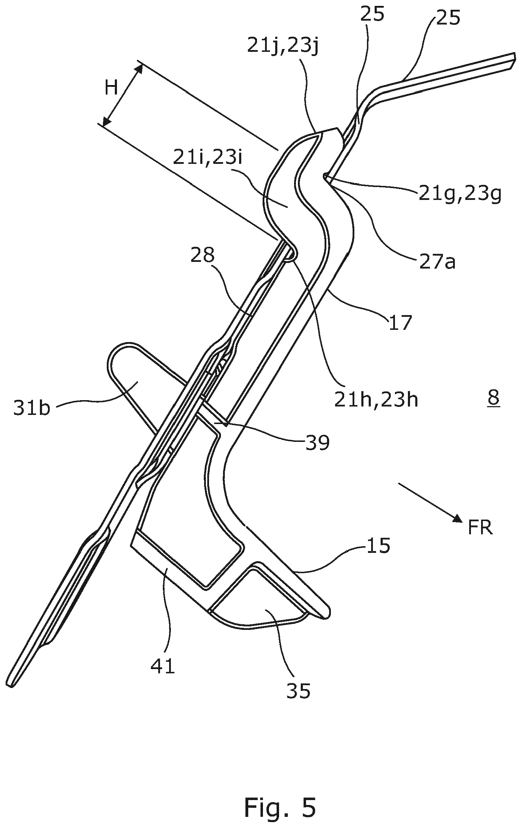

The rear side 28 (Fig. 5) of the bracket is profiled to fit against the vehicle cant-rail 25. The rear side of the bracket 28 includes ribs 39 (Fig. 5), which are arranged to provide mechanical strength to the bracket.

The bracket 5 may comprise a moulded component. For example, the bracket 5 can be produced by injection moulding. The bracket may be made from a plastics material, such as polypropylene.

Typically, a motorcar includes an A-pillar, a B-pillar and a C-pillar; which all support the cant-rail 25. The A and B pillars define a front side door aperture, and the B and C pillars define a rear side door aperture. The curtain airbag 7 extends along the cant-rail 25 above the front side door aperture and the rear side door aperture.

As mentioned above, the vehicle cant-rail 25 includes rectangular apertures 27a, 27b (Fig. 3) and rectangular slots 33a, 33b. Each aperture 27a, 27b is arranged to receive one of the hooks 21, 23. Each slot 33a, 33b is arranged to receive one of the resilient clips 31a, 31b. In use, the bracket 5 is attached to the cant-rail 25 above a vehicle pillar 11, such as the B-pillar or the C-pillar. For some vehicles, only one bracket 5 may be included, mounted over either the B-pillar or the C-pillar. In preferred arrangements, the curtain airbag system 1 includes two brackets 5, one mounted above the B-pillar and one mounted above the C-pillar. For other vehicles having additional pillars, at least one additional bracket 5 may be included, mounted over an additional pillar. The apertures 27a, 27b and slots 33a, 33b are located in the cant-rail 25 adjacent an upper portion of the or each pillar 11. The arrangement of the apertures 27a, 27b and slots 33a, 33b is such that when the bracket 5 is mounted in-situ, it is located directly above the pillar 11, in a manner shown in Figures 3 and 4. It can be seen from Figure 5 that the height H of each hook is matched to the height H of the apertures 27a, 27b in the cant-rail 25.

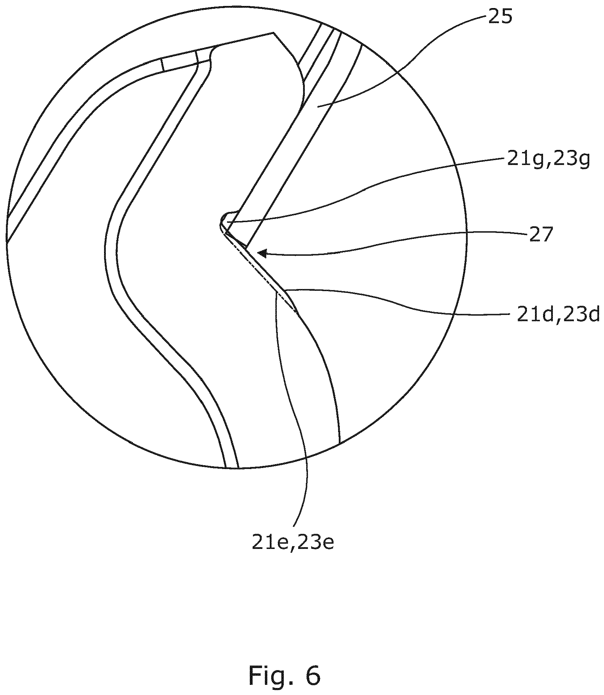

To mount the bracket 5 to the cant-rail 25, the operative inserts the third portions 21c, 23c of the hooks into the respective apertures 27a, 27b, and engages the cant-rail structure with notches 21g, 23g. The operative then pivots the bracket 5 with respect to the cant-rail 25 about notches 21g, 23g such that the second portions 21b, 23b of the hooks are forced into the apertures 27. The bracket body 13 is pivoted downwards away from the vehicle roof. During this pivoting movement, the crushable ribs 21d, 23d plastically deform since the cant-rail 25 material, which is typically steel, is harder and stronger than the ribs 21d, 23d. The plastic deformation is illustrated diagrammatically in Figure 6, which shows the cant-rail structure biting into one of the ribs 21d, 23d. The operative continues to pivot the bracket 5 with respect to the cant-rail 25 until the clips 31a, 31b enter into slots 33a, 33b; and the rear side 28 of the bracket 5 abuts the cant-rail 25. The bracket 5 is now firmly attached to the cant-rail 25. No further attachment means, such as bolts or adhesive is required to fix the bracket 5 to the vehicle. The crushed ribs 21d, 23d ensure that there is a very tight fit between the hooks 21, 23 and the cant-rail 25; which prevents the bracket from rattling against the cant-rail 25. As the hooking members 21, 23 protrude from a top face 19 of the bracket 5, and the clips 31a, 31b are mounted to a lower region of the bracket, the retention force as the hooking members and clips lock into the vehicle is distributed above and below, and fore and aft on the vehicle, giving a stable and sure-footed location on the vehicle as the airbag fires and inflates.

The bracket 5 can be attached to the vehicle 3, and the airbag 7 can be subsequently mounted to the vehicle so that it over lies the bracket as shown in Figure 7. Alternatively, the airbag 7 can be pre-attached to the bracket 5, such that the bracket 5 and airbag 7 are mounted to the vehicle together.

The cant-rail 25 is inclined to the vertical, when viewed in cross-section (see Figure 5). It can be seen in Figure 5, that when the bracket 5 is mounted on the cant-rail 25, the first guide surface 15 faces generally upwards, towards a vehicle roof, and protrudes inwards towards the vehicle cabin 8, sloping downwards away from the cant-rail 25. The first guide surface 15 is substantially perpendicular to the cant-rail 25. The second guide surface 17 faces generally frontwards towards the vehicle cabin 8 and downwards, and protrudes upwards towards the vehicle roof. The second guide surface 17 is substantially parallel with the cant-rail 25.

When the car is fully assembled, a headliner 43 (Fig. 8) covers the curtain airbag system 1. A lower end 43a of the headliner is tucked in behind the pillar trim element 9. When the curtain airbag 7 deploys, the bracket 5 ensures that the airbag 7 deploys over an upper portion of the pillar trim element 9. The second guide surface 17 guides the airbag 7 inwards into the vehicle cabin 8 and over the first guide surface 15. It can be seen from Figure 8 that the relative position and orientation of the bracket 5, with respect to the pillar trim element 9, ensures that the first guide surface 15 guides the deploying airbag 7 to clear the upper portion of the trim element 9. As the airbag 7 deploys, the headliner 43 moves inwards into the cabin 8. This is not dangerous to vehicle occupants, since the liner 43 comprises a relatively soft flexible material or cloth.

It can be seen from the description above, that the above bracket 5 can be easily attached to the vehicle 3 without requiring any specialist tools; and can be easily applied by an operative located outside of the vehicle. In particular, the bracket 5 is not fixed to the vehicle using bolts or other additional attachment means; and therefore, the operative does not have to lean into the vehicle or climb into the vehicle to tighten up bolts. Since the crushable ribs 21d, 23d plastically deform to hold the bracket 5 tightly against the vehicle, the likelihood of NVH problems occurring is significantly reduced. Furthermore, the bracket provides an equivalent guiding function to prior art devices, which are bolted to the vehicle; and therefore, having a "quick fit" mounting arrangement does not compromise the essential function of the bracket. Nor is the strength of the bracket significantly reduced, compared to prior art brackets.

Although the present invention has been described in connection with specific preferred embodiments, it should be understood that the invention as claimed should not be unduly limited to such specific embodiments. Furthermore, it will be apparent to the skilled person that modifications can be made to the above embodiments that fall within the scope of the invention.

For example, the bracket may include a different number of hooks 21, 23. The bracket can include a single hook 21 or 23; or can include any practicable number, such as 3 or 4 hooks.

Typically, the vehicle 3 includes a plurality of curtain airbag systems 1, for example one curtain airbag system 1 for each of the left and right sides of the vehicle.

The curtain airbag system can include any practicable number of brackets 5, to suit the vehicle.

The bracket can be made from other plastics materials.

## Claims

1. A bracket (5) for a vehicle curtain airbag system (1), which is arranged to be mounted to an interior part of a vehicle (3) adjacent an upper end of a structural pillar (11), the bracket (5) including: a body (13) having a first guide surface (15) for guiding deployment of a curtain airbag (7) into a vehicle cabin (8), the first guide surface being arranged to prevent the airbag from snagging on a pillar trim element (9); and a first load bearing hooking member (21, 23) for attaching the body (13) to the vehicle (3), wherein the hooking member is arranged to hook into a first aperture (27a, 27b) formed in a vehicle structural element (25);
**characterized in that**:
the first hooking member includes a plastically deformable portion (21d, 23d), which is arranged to plastically deform on insertion into the aperture.

2. A bracket (5) according to claim 1, wherein the plastically deformable portion (21d, 23d) includes at least one crushable protrusion.

3. A bracket (5) according to claim 1 or claim 2, wherein the plastically deformable portion (21d, 23d) is located on an upper part (21c, 23c) of the hooking member (21, 23).

4. A bracket (5) according to any one of the preceding claims, wherein the hooking member (21, 23) includes a first part (21a, 23a), which protrudes upwards from the body (13); a second part (21b, 23b) that protrudes rearwards from the first part; and a third part (21c, 23c) which protrudes upwards from the second part.

5. A bracket (5) according to any one of the preceding claims, wherein the hooking member (21, 23) protrudes upwards from a top side (19) of the body (13).

6. A bracket (5) according to any one of the preceding claims, wherein the body (13) includes a second guide surface (17) for guiding deployment of a curtain airbag (7).

7. A bracket (5) according to claim 6, wherein the first guide surface (15) protrudes in a frontward direction towards the vehicle cabin from the second guide surface (17).

8. A bracket (5) according to any one of the preceding claims, including at least one resilient clip (31a, 31b).

9. A bracket (5) according to claim 8, wherein the at least one resilient clip (31a, 31b) is located in a lower region of the bracket.

10. A bracket (5) according to any one of the preceding claims, wherein the bracket comprises a moulded component.

11. A bracket (5) according to any one of the preceding claims, wherein the bracket includes a plastic material.

12. A vehicle (3) including a structural element (25) having a first aperture (27a, 27b) formed therein, a first structural pillar (11), and a first pillar trim element (9) mounted on the first structural pillar; and a curtain airbag system (1) including a curtain airbag (7) and a first bracket (5) according to any one of claims 1 to 11, said first bracket having a body (13) including a first guide surface (15) for guiding deployment of the curtain airbag into a vehicle cabin (8), the guide surface being arranged to prevent the airbag (7) from snagging on the first pillar trim element (9), and a first load bearing hooking member (21, 23) for attaching the body (13) to the vehicle (3), wherein the first hooking member is hooked into the first aperture (27a, 27b), and the first hooking member (21, 23) includes a plastically deformed portion (21d, 23d), the plastically deformed portion having been deformed on insertion into the first aperture.

13. A vehicle (3) according to claim 12, wherein the plastically deformed portion (21d, 23d) is located on a front facing surface (21f, 23f) towards the vehicle cabin of the hooking member (21, 23).

14. A vehicle (3) according to claim 12 or claim 13, wherein the first guide surface (15) is located below the hooking member (21, 23).

15. A method of installing a curtain airbag bracket (5) according to any one of claims 8 to 11 in a vehicle (3), wherein an operative aligns the hooking member (21, 23) with a respective aperture (27a, 27b) in a vehicle structural element (25), and pivots the bracket (5) so that the hooking member (21, 23) and the resilient clips (31a, 31b) lock onto the vehicle structure, and a rear side (28) of the bracket (5) abuts the vehicle structural element (25).

## Patentansprüche

1. Halterung (5) für ein Fahrzeugvorhangairbag-System (1), die angeordnet ist, um an einem Innenteil eines Fahrzeugs (3) benachbart zu einem oberen Ende einer Struktursäule (11) montiert zu werden, wobei die Halterung (5) Folgendes umfasst: einen Körper (13) mit einer ersten Führungsfläche (15) zum Führen der Entfaltung eines Vorhangairbags (7) in eine Fahrzeugkabine (8), wobei die erste Führungsfläche so angeordnet ist, dass der Airbag nicht an einem Säulenverkleidungselement (9) hängen bleibt; und ein erstes lasttragendes Hakenelement (21, 23) zum Befestigen des Körpers (13) an dem Fahrzeug (3), wobei das Hakenelement zum Einhängen in eine erste Öffnung (27a, 27b), die in einem Fahrzeugstrukturelement (25) ausgebildet ist, angeordnet ist;
**dadurch gekennzeichnet, dass**:
das erste Hakenelement einen plastisch verformbaren Abschnitt (21d, 23d) aufweist, der angeordnet ist, um sich beim Einführen in die Öffnung plastisch zu verformen.

2. Halterung (5) nach Anspruch 1, wobei der plastisch verformbare Abschnitt (21d, 23d) mindestens einen zerdrückbaren Vorsprung aufweist.

3. Halterung (5) nach Anspruch 1 oder Anspruch 2, wobei der plastisch verformbare Abschnitt (21d, 23d) an einem oberen Teil (21c, 23c) des Hakenelements (21, 23) angeordnet ist.

4. Halterung (5) nach einem der vorangehenden Ansprüche, wobei das Hakenelement (21, 23) einen ersten Teil (21a, 23a) aufweist, der vom Körper (13) nach oben vorsteht; einen zweiten Teil (21b, 23b), der von dem ersten Teil nach hinten vorsteht; und einen dritten Teil (21c, 23c), der vom zweiten Teil nach oben vorsteht.

5. Halterung (5) nach einem der vorangehenden Ansprüche, wobei das Hakenelement (21, 23) von einer Oberseite (19) des Körpers (13) nach oben vorsteht.

6. Halterung (5) nach einem der vorangehenden Ansprüche, wobei der Körper (13) eine zweite Führungsfläche (17) zum Führen der Entfaltung eines Vorhangairbags (7) aufweist.

7. Halterung (5) nach Anspruch 6, wobei die erste Führungsfläche (15) von der zweiten Führungsfläche (17) nach vorne in Richtung der Fahrzeugkabine vorsteht.

8. Halterung (5) nach einem der vorangehenden Ansprüche, die mindestens eine elastische Klammer (31a, 31b) aufweist.

9. Halterung (5) nach Anspruch 8, wobei sich die mindestens eine elastische Klammer (31a, 31b) in einem unteren Bereich der Halterung befindet.

10. Halterung (5) nach einem der vorangehenden Ansprüche, wobei die Halterung eine gegossene Komponente umfasst.

11. Halterung (5) nach einem der vorangehenden Ansprüche, wobei die Halterung ein Kunststoffmaterial umfasst.

12. Fahrzeug (3) mit einem Strukturelement (25) mit einer darin ausgebildeten ersten Öffnung (27a, 27b), einer ersten Struktursäule (11) und einem ersten Säulenverkleidungselement (9), das an der ersten Struktursäule angebracht ist; und ein Vorhangairbag-System (1), das einen Vorhangairbag (7) und eine erste Halterung (5) nach einem der Ansprüche 1 bis 11 umfasst, wobei die erste Halterung einen Körper (13) mit einer ersten Führungsfläche (15) zum Führen der Entfaltung des Vorhangairbags in eine Fahrzeugkabine (8) aufweist, wobei die Führungsfläche angeordnet ist, um zu verhindern, dass der Airbag (7) an dem ersten Säulenverkleidungselement (9) hängen bleibt, und ein erstes lasttragendes Hakenelement (21, 23) zum Befestigen des Körpers (13) an dem Fahrzeug (3), wobei das erste Hakenelement in die erste Öffnung (27a, 27b) eingehängt ist und das erste Hakenelement (21, 23) einen plastisch verformten Abschnitt (21d, 23d) umfasst, wobei der plastisch verformte Abschnitt beim Einführen in die erste Öffnung verformt wurde.

13. Fahrzeug (3) nach Anspruch 12, wobei der plastisch verformte Abschnitt (21d, 23d) an einer nach vorne gerichteten Fläche (21f, 23f) in Richtung der Fahrzeugkabine des Hakenelements (21, 23) angeordnet ist.

14. Fahrzeug (3) nach Anspruch 12 oder Anspruch 13, wobei die erste Führungsfläche (15) unterhalb des Hakenelements (21, 23) angeordnet ist.

15. Verfahren zum Installieren einer Halterung (5) für ein Vorhangairbag nach einem der Ansprüche 8 bis 11 in einem Fahrzeug (3), wobei ein Betätigungselement das Hakenelement (21, 23) mit einer jeweiligen Öffnung (27a, 27b) in einem Fahrzeugstrukturelement (25) ausrichtet und die Halterung (5) so schwenkt, dass das Hakenelement (21, 23) und die elastischen Klammern (31a, 31b) an der Fahrzeugstruktur einrasten, und eine Rückseite (28) der Halterung (5) an dem Fahrzeugstrukturelement (25) anliegt.

## Revendications

1. Support (5) pour un système d'airbag rideau de véhicule (1), agencé pour être monté sur une partie intérieure d'un véhicule (3) adjacente à une extrémité supérieure d'un montant structurel (11), le support (5) comportant : un corps (13) ayant une première surface de guidage (15) destinée à guider le déploiement d'un airbag rideau (7) dans un habitacle de véhicule (8), la première surface de guidage étant agencée pour empêcher l'airbag de s'accrocher à un élément de garniture de montant (9) ; et un premier élément d'accrochage porteur de charge (21, 23) destiné à fixer le corps (13) au véhicule (3), l'élément d'accrochage étant agencé pour s'accrocher à une première ouverture (27a, 27b) formée dans un élément structurel de véhicule (25) ;
**caractérisé en ce que** :
le premier élément d'accrochage comporte une partie déformable plastiquement (21d, 23d) qui est agencée pour se déformer plastiquement lors de l'insertion dans l'ouverture.

2. Support (5) selon la revendication 1, dans lequel la partie déformable plastiquement (21d, 23d) comporte au moins une saillie écrasable.

3. Support (5) selon la revendication 1 ou 2, dans lequel la partie déformable plastiquement (21d, 23d) est située sur une partie supérieure (21c, 23c) de l'élément d'accrochage (21, 23).

4. Support (5) selon l'une quelconque des revendications précédentes, dans lequel l'élément d'accrochage (21, 23) comporte une première partie (21a, 23a) qui fait saillie vers le haut depuis le corps (13) ; une deuxième partie (21b, 23b) qui fait saillie vers l'arrière depuis la première partie ; et une troisième partie (21c, 23c) qui fait saillie vers le haut depuis la deuxième partie.

5. Support (5) selon l'une quelconque des revendications précédentes, dans lequel l'élément d'accrochage (21, 23) fait saillie vers le haut depuis un côté supérieur (19) du corps (13).

6. Support (5) selon l'une quelconque des revendications précédentes, dans lequel le corps (13) comporte une seconde surface de guidage (17) destinée à guider le déploiement d'un airbag rideau (7).

7. Support (5) selon la revendication 6, dans lequel la première surface de guidage (15) fait saillie depuis la seconde surface de guidage (17) en direction de l'avant vers l'habitacle du véhicule.

8. Support (5) selon l'une quelconque des revendications précédentes, comportant au moins un clip élastique (31a, 31b).

9. Support (5) selon la revendication 8, dans lequel l'au moins une attache élastique (31a, 31b) est située dans une région inférieure du support.

10. Support (5) selon l'une quelconque des revendications précédentes, dans lequel le support comprend un composant moulé.

11. Support (5) selon l'une quelconque des revendications précédentes, dans lequel le support comporte un matériau plastique.

12. Véhicule (3) comportant un élément structurel (25) ayant une première ouverture (27a, 27b) formée dans celui-ci, un premier montant de structure (11) et un élément de garniture de premier montant (9) monté sur le premier montant de structure ; et un système d'airbag rideau (1) comportant un airbag rideau (7) et un premier support (5) selon l'une quelconque des revendications 1 à 11, ledit premier support étant doté d'un corps (13) comportant une première surface de guidage (15) destinée à guider le déploiement de l'airbag rideau dans un habitacle de véhicule (8), la surface de guidage étant agencée pour empêcher l'airbag (7) de s'accrocher sur l'élément de garniture du premier pilier (9), et un premier élément d'accrochage porteur (21, 23) destiné à fixer le corps (13) au véhicule (3), le premier élément d'accrochage étant accroché dans la première ouverture (27a, 27b) et le premier élément d'accrochage (21, 23) comportant une partie déformée plastiquement (21d, 23d), la partie déformée plastiquement ayant été déformée lors de son insertion dans la première ouverture.

13. Véhicule (3) selon la revendication 12, dans lequel la partie déformée plastiquement (21d, 23d) est située sur une surface tournée vers l'avant (21f, 23f) en direction de l'habitacle du véhicule de l'élément d'accrochage (21, 23).

14. Véhicule (3) selon la revendication 12 ou la revendication 13, dans lequel la première surface de guidage (15) est située sous l'élément d'accrochage (21, 23).

15. Procédé d'installation d'un support d'airbag rideau (5) selon l'une quelconque des revendications 8 à 11 dans un véhicule (3), dans lequel un opérateur aligne l'élément d'accrochage (21, 23) avec une ouverture respective (27a, 27b) dans un élément de structure de véhicule (25) et fait pivoter le support (5) de sorte que l'élément d'accrochage (21, 23) et les attaches élastiques (31a, 31b) se verrouillent sur la structure du véhicule et un côté arrière (28) du support (5) vient en butée contre l'élément de structure de véhicule (25).
